# EUROPEAN PATENT APPLICATION

(11) **EP 2 369 882 A1**
(43) Date of publication of application: **28.09.2011**
(21) Application number: 09834072.2
(22) Date of filing: 14.12.2009
(51) Int. Cl.: H04W 68/00

(54) **METHOD, DEVICE AND SYSTEM FOR INFORMING DATA MODIFICATION**

(30) Priority: 22.12.2008 CN 200810186276
(71) Applicant: Huawei Technologies Co., Ltd., Shenzhen, Guangdong 518129 (CN)
(72) Inventor: CAO, Junliang, Shenzhen Guangdong 518129 (CN); XUN, Peng, Shenzhen Guangdong 518129 (CN); YAN, Xuexia, Shenzhen Guangdong 518129 (CN); LIU, Kun, Shenzhen Guangdong 518129 (CN)
(74) Representative: Barth, Stephan Manuel
(86) International application number: PCT/CN2009/075553
(87) International publication number: WO 2010/072119

(57) **Abstract**

The present invention relates to communication technologies and discloses a method, device, and system for notifying data modification, so that a front end (FE) can process the notification of service data modification with higher efficiency. In embodiments of the present invention, pre-specified additional notification content is obtained after the subscribed service data is modified, and a notification request that carries notification content of data modification and the additional notification content is sent to the FE. The present invention is used in a technology where the modification of the service data is notified to the FE of a network element (NE) after the service data is modified.

## Description

This application claims priority to Chinese Patent Application No. 200810186276.8, filed with the Chinese Patent Office on December 22, 2008 and entitled "Method, Device and System for Notifying Data Modification", which is incorporated herein by reference in its entirety.

### FIELD OF THE INVENTION

The present invention relates to the field of communication technologies, and in particular, to a method, device, and system for notifying data modification in the communication field.

### BACKGROUND OF THE INVENTION

A convergent database is a common data storage device used on a network. As a storage platform, the convergent database provides the data storage service and data access service for network elements (NEs) on different networks or different NEs on the same network. When the convergent database provides the data storage service and data access service, user data is stored in the convergent database on a centralized basis. An NE needs to process the service only. In addition, the NE may obtain all the data required in service processing from the convergent database.

After the NE separates the service from the data, the front end (FE) of the NE may access the same data in the convergent database. When the data in the convergent database is modified, the FE of the NE is required to sense the data modification in the convergent database.

In the prior art, after the data in the convergent database is modified, the FE of the NE senses the data modification by using the following method: The FE of the NE needs to subscribe to the data in the convergent database; when some subscribed data in the convergent database is modified, the convergent database sends a notification request to the FE of the NE to notify the FE of the modified part of the subscribed data or all the subscribed data. After receiving the notification request, the FE of the NE may need to query the convergent database for data. The FE of the NE can perform next service processing only after the data is queried for and found.

The prior art has the following disadvantages: After receiving a data modification notification from the convergent database, the FE needs to send a query request to the convergent database; the FE can perform next service processing only after it obtains other unsubscribed data. Consequently, the FE processes the notification of service data modification with low efficiency.

### SUMMARY OF THE INVENTION

Embodiments of the present invention provide a method, device, and system for notifying data modification so that an FE can process the notification of service data modification with higher efficiency.

To achieve the preceding objective, embodiments of the present invention adopt the following technical solution:

A method for notifying data modification includes:
after subscribed service data is modified, obtaining pre-specified additional notification content; and
sending a notification request that carries notification content of data modification and additional notification content to an FE.

A convergent database includes:
an obtaining unit, adapted to obtain pre-specified additional notification content after subscribed service data is modified; and
a sending unit, adapted to send a notification request that carries notification content of data modification and additional notification content to an FE.

A system for notifying data modification includes:
a convergent database, adapted to: obtain pre-specified additional notification content after subscribed service data is modified, and send a notification request that carries notification content of data modification and additional notification content to an FE; and
the FE, adapted to: receive a notification request from the convergent database, and process the notification request according to the notification content of data modification and the additional notification content.

According to the method, device and system for notifying data modification provided in embodiments of the present invention, after the subscribed service data in the convergent database is modified, the unsubscribed specified additional notification content needs to be obtained, and the additional notification content is sent to the FE. Simultaneously, the notification content of data modification is sent to the FE, so that the FE can sense the modification of the service data. Because the FE can receive the additional notification content required for processing the service data modification, the FE can perform corresponding processing according to the additional notification content and service data modification. Because a notification request carries the additional notification content, the FE can perform corresponding processing upon receiving the notification request. Therefore, the FE can process the notification request with higher efficiency.

### BRIEF DESCRIPTION OF THE DRAWINGS

To make the technical solution in embodiments of the present invention or in the prior art clearer, the accompanying drawings according to embodiments of the present invention or the prior art are described briefly. Obviously, the accompanying drawings are exemplary only, and those skilled in the art may derive other drawings from such accompanying drawings without creative efforts.
FIG. 1 is a block diagram of a system for adopting the convergent database;
FIG. 2 is a flowchart of a method for notifying data modification according to an embodiment of the present invention;
FIG. 3 is a block diagram of a convergent database according to an embodiment of the present invention;
FIG. 4 is a block diagram of a system for notifying data modification according to an embodiment of the present invention;
FIG. 5 is an architecture diagram of data according to a first embodiment of the present invention;
FIG. 6 is a flowchart of a method for notifying data modification according to a first embodiment of the present invention;
FIG. 7 is a block diagram of a convergent database according to a first embodiment of the present invention;
FIG. 8 is a block diagram of another convergent database according to a first embodiment of the present invention; and
FIG. 9 is a flowchart of a method for notifying data modification according to a second embodiment of the present invention.

### DETAILED DESCRIPTION OF THE EMBODIMENTS

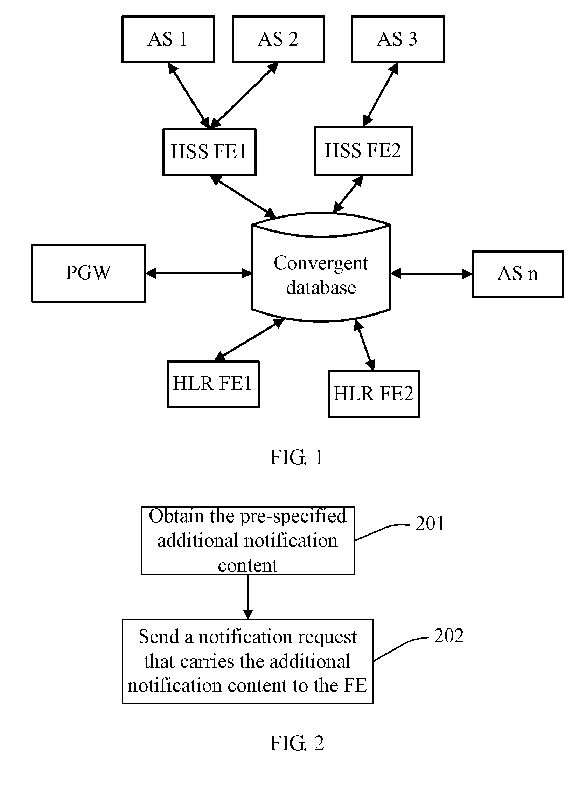

As shown in FIG. 1, NEs such as a Home Location Register (HLR) and a Home Subscriber Server (HSS) separate data from services. Data of multiple HLRs and multiple HSSs is stored in a convergent database on a centralized basis. The HLR front end (HLR FE) and the HSS front end (HSS FE) perform service processing only. The convergent database supports multiple interfaces, such as the Lightweight Directory Access Protocol (LDAP) and the Simple Object Access Protocol (SOAP). Some operations may be performed on the convergent database by using the Provisioning Gate Way (PGW) shown in FIG. 1, such as modification of data in the convergent database.

FIG. 2 is a flowchart showing a method for notifying data modification according to an embodiment of the present invention. The method includes the following steps:
Step 201: Although multiple NEs share service data in the convergent database, not every NE needs to use all the service data in the convergent database. Therefore, the FE of each NE subscribes to the service data in the convergent database. When the subscribed service data is modified, the FE needs to sense the modification. In addition, to process the service data modification, the FE also needs other data in addition to the notification content of data modification. Therefore, in this embodiment, the pre-specified additional notification content is obtained firstly. The additional notification content is other data that is not subscribed to by the FE but required for processing the service data modification.
Step 202: To ensure that the FE can sense the service data modification, the convergent database needs to send a notification request that carries the obtained additional notification content and notification content of data modification to the FE.

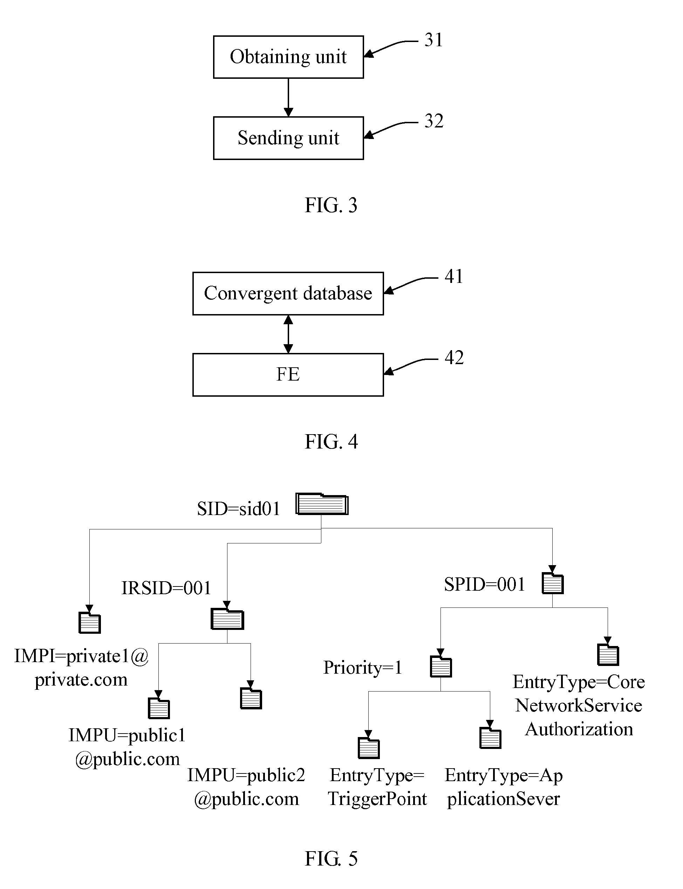

An embodiment of the present invention provides a convergent database. As shown in FIG. 3, the convergent database includes an obtaining unit 31 and a sending unit 32.

The obtaining unit 31 is adapted to obtain pre-specified additional notification content after the subscribed service data is modified. The sending unit 32 is adapted to send a notification request that carries notification content of data modification and additional notification content to the FE, so that the FE can sense the service data modification.

An embodiment of the present invention provides a system for notifying data modification. As shown in FIG. 4, the system includes a convergent database 41 and an FE 42. The convergent database 41 is adapted to: obtain the pre-specified additional notification content after the subscribed service data is modified, and send a notification request that carries the additional notification content to the FE 42. The FE 42 is adapted to: receive the notification request that carries the additional notification content from the convergent database 41, and process the notification request according to the notification content of data modification and the additional notification content. The processing operation is to notify an entity specified in the additional notification content of the service data modification (see the description in the first embodiment for details).

According to the method, device and system for notifying data modification provided in the embodiments of the present invention, after the subscribed service data in the convergent database is modified, the specified additional notification content needs to be obtained and sent to the FE, so that the FE can sense the service data modification. Furthermore, the FE can receive additional notification content required for processing the service data modification, so that the FE can perform corresponding processing according to the additional notification content and the service data modification. Because a notification request carries the additional notification content, the FE can perform corresponding processing upon receiving the notification request. Therefore, the FE can process the notification request with higher efficiency.

The technical solution provided in embodiments of the present invention is hereinafter described in detail with reference to the accompanying drawings. Obviously, the embodiments are exemplary only and the present invention is not limited to such embodiments. Other embodiments that those skilled in the art derive from the embodiments of the present invention also fall within the protection scope of the present invention.

### Embodiment 1

This embodiment provides a system for notifying data modification. The system includes a convergent database and an HSS FE. The HSS FE subscribes to the user service data in the convergent database. The HSS FE interacts with the convergent database by using the LDAP.

In this embodiment, additional notification content includes data that is not subscribed to by the FE but required for processing the service data modification. Obviously, those skilled in the art may add the data subscribed to by the FE to the additional notification content. In this embodiment, the convergent database is adapted to: after the subscribed service data is modified, obtain unsubscribed additional notification content that is pre-specified, and send a notification request that carries the additional notification content to the FE. The FE is adapted to: receive the notification request that carries the additional notification content from the convergent database, and perform corresponding processing according to the service data modification and the additional notification content.

In this embodiment, the method for pre-specifying the additional notification content includes: The FE sends a subscription request that specifies the additional notification content to the convergent database; the convergent database receives the subscription request from the FE, and obtains the additional notification content specified in the subscription request.

The following description takes the application in an IP Multimedia Subsystem (IMS) as an example. The user data in the IMS is shown in FIG. 5, in which the node whose node entry DN is "SID=sid01" refers to the subscription information of the user. The node referring to the subscription information includes the subscription identifier (SID) attribute of the user and the address of the Serving-Call Session Control Function (S-CSCF) that serves the user, where the address is represented by the "currentSCSCFName". The node whose DN is "IMPI=private1@private.com, SID=sid01" refers to the private user information. The node referring to the private user information includes an IMS private user identity (IMPI) and an implicit registration set identifier (IRSID) attribute corresponding to the IMPI. The node whose DN is "IRSID=001, SID=sid01" refers to implicit registration set (IRS) information, and includes an IRSID attribute and a RegistrationStatus attribute of the public user in the IRS. In FIG. 5, the node whose DN is "IMPU=public1@public.com, IRSID=001, SID=sid01" and the node whose DN is "IMPU=public2@public.com, IRSID=001, SID=sid01" refer to the public user, and include an IMS public user identity (IMPU) attribute and a service profile identifier (SPID). The node whose DN is "SPID=001, SID=sid01" refers to the service data node, and includes an SPID and an IMS public user identity (IMPURef) attribute sharing the service data. The node whose DN is "EntryType=CoreNetworkServiceAuthorization, SPID=001, SID=sid01" refers to the service authorization information. The node whose DN is "Priority=1, SPID=001, SID=sid01" refers to an initial filtering rule. The node whose DN is "EntryType=TriggerPoint, Priority=1, SPID=001, SID=sid01" refers to the trigger point information in the initial filtering rule. The node whose DN is "EntryType=ApplicationServer, Priority=1, SPID=001, SID=sid01" refers to the application server (AS) information in the initial filtering rule.

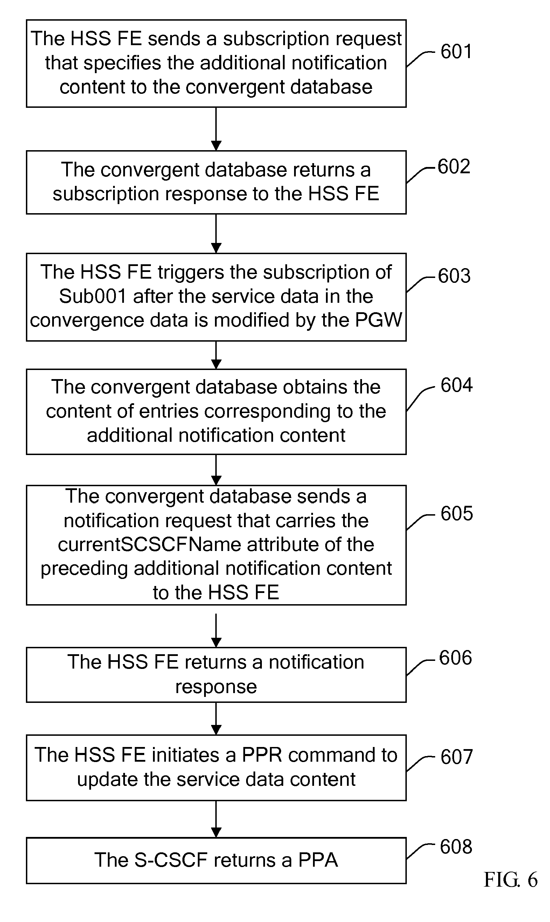

As shown in FIG. 6, the method for notifying data modification includes:
Step 601: The HSS FE sends a subscription request to the convergent database to subscribe to the service data, where the subscription request specifies that the additional notification content is the address of the S-CSCF serving the user and consists of an LDAP query. That is, when the service data is modified, the HSS FE queries the convergent database by using the "SID=sid01" as the portal, and the convergent database returns the currentSCSCFName attribute to the HSS FE.
Step 602: After receiving the subscription request, the convergent database stores the content of the subscription request, and returns a subscription response to the HSS FE. Here suppose that the subscription is identified by Sub001.
Step 603: After the entry "EntryType=TriggerPoint, Priority= 1, SPID=001, SID=sid01" in the convergent database is modified, the HSS FE triggers the subscription of the Sub001 because the preceding entry belongs to the subscribed content of the Sub001.
Step 604: The convergent database obtains the entry content corresponding to the additional notification content according to the additional notification content specified by the subscription of the stored Sub001. That is, the convergent database queries for the currentSCSCFName attribute by using the entry "SID=sid01" as the portal, and uses the queried currentSCSCFName (which may be used to represent the S-CSCF address information) as the additional notification content.
Step 605: The convergent database sends a notification request that carries the notification content of data modification and the preceding currentSCSCFName attribute (the additional notification content) to the HSS FE.
   In this embodiment, the notification content of data modification is all the service data subscribed to by the HSS FE. In this way, the HSS FE can perform subsequent service processing directly after receiving the notification request. The notification content of data modification may also be the modified part of the service data subscribed to by the HSS FE. In this way, the HSS FE obtains all the service data subscribed to by the HSS FE before performing subsequent service processing.
Step 606: The HSS FE returns a notification response to the convergent database after receiving the notification request.
Step 607: If the HSS FE determines that the user service data is modified according to the content of the notification request, the HSS FE coverts the service data entry into a PPR command format according to the modified address information of the S-CSCF in the notification request, and then sends a PPR command to the S-CSCF to update the service data content.
Step 608: The S-CSCF updates the buffered user service data, and then returns a push profile answer (PPA).

In the preceding process, the additional notification content is indicated by a subscription request in the LDAP format. The implementation method includes but is not limited to the following:
1. Carry the additional notification content by extending the data items of the subscription request.
   A data item is added to the subscription request to describe the additional notification content. For example, the data item NotifyDataAssign is added to the subscription request; the data item NotifyDataAssign represents the additional notification content by using one or multiple LDAP queries or by using one or multiple entries. This method is described by using the LDAP search as an example. The following is the definition of the data item NotifyDataAssign, where the searchRequest refers to the query request:
   NotifyData::=SEQUENCE OF searchRequest SearchRequest
   In addition, a data item is added to the notification request to carry an entry corresponding to the specified additional notification content during the subscription. For example, the data item AdditionalNotifyData is added to the notification request, and the item consists of one or multiple LDAP entries. The following is the definition of the data item AdditionalNotifyData, where the searchResultEntry refers to the entry found and returned:
   AdditionalNotifyData::=SEQUENCE OF searchResultEntry SearchResultEntry.
2. Carry the additional notification content by using the LDAP control.

A new LDAP control NotifyDataAssignControl is defined. This control in the subscription request is to describe the additional notification content. The format of the NotifyDataAssignControl defined is shown as follows:

```
          Control::=SEQUENCE {
          controlType LDAPOID, ; the value of the LDAPOID is 1.3.6.1.2.15 (exp.)
          criticality BOOLEAN DEFAULT FALSE,
          controlValue OCTET STRING OPTIONAL; the value is
 NotifyDataAssignValue
          }
          NotifyAssignValue::=SEQUENCE OF searchRequest SearchRequest
    
```

A new LDAP control AdditionalNotifyDataControl is defined. The additional notification content is carried in the notification request by using this control. The specificcodes are shown as follows:

```
Control::=SEQUENCE {

          controlType LDAPOID, ; the value of the LDAPOID is 1.3.6.1.2.16 (exp.)
          criticality BOOLEAN DEFAULT FALSE,
          controlValue OCTET STRING OPTIONAL; the value is
 AdditionalNotifyDataValue
          }
          AdditionalNotifyDataValue::=SEQUENCE OF searchResultEntry
 SearchResultEntry
```

In the process described in FIG. 6, when the convergent database sends a notification request to the HSS FE, the notification content of data modification and the preceding currentSCSCFName attribute are carried in the notification request, so that the HSS FE can directly perform subsequent service processing. In this way, the number of interactions between the HSS FE and the convergent database is reduced, and the HSS FE can perform subsequent service processing with higher efficiency.

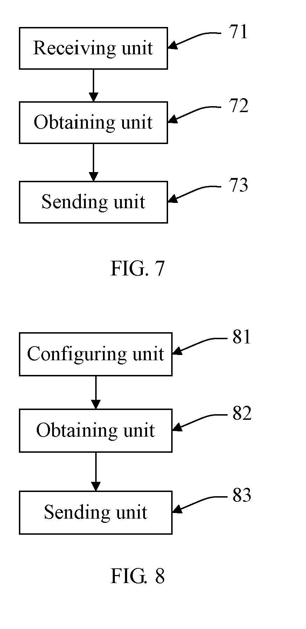

As shown in FIG. 7, the convergent database provided in this embodiment includes a receiving unit 71, an obtaining unit 72, and a sending unit 73.

The receiving unit 71 is adapted to receive a subscription request that specifies the additional notification content from the FE. The obtaining unit 72 is adapted to obtain the additional notification content specified in the subscription request after the subscribed service data is modified. In this embodiment, the additional notification content is the data that is not subscribed to by the FE but required for processing the service data modification. The sending unit 73 is adapted to send a notification request that carries the additional notification content to the FE.

In this embodiment, the unsubscribed additional notification content is pre-specified in the subscription request. In this embodiment, after the subscribed service data in the convergent database is modified, the unsubscribed specified additional notification content is obtained. In addition, the additional notification content is sent to the FE, so that the FE can sense the service data modification. Furthermore, the FE can receive the additional notification content required for processing the service data modification, so that the FE can perform corresponding processing according to the additional notification content and the service data modification. Because the additional notification content is carried in a notification request, the FE can perform corresponding processing upon receiving the notification request. In this way, the number of interactions between the FE and the convergent database is reduced, and the FE can process the notification request with higher efficiency.

In addition to the preceding method, the additional notification content may be specified by the following method: configuring the additional notification content directly in the convergent database, for example, configuring the additional notification content corresponding to each piece of subscribed data by using a configuration file or a configuration table (collectively referred to a configuration item). When the service data in the convergent database is modified, the specified additional notification content configured in the configuration item is obtained, and then a notification request that includes the additional notification content is sent to the HSS FE.

When the additional notification content is specified through configuration, the convergent database is further adapted to specify additional notification content in the configuration item of the convergent database. The specific configuration content is the same as the content included in the subscription request. The additional notification content obtained by the convergent database is the additional notification content specified in the configuration item.

As shown in FIG. 8, the convergent database includes a configuring unit 81, an obtaining unit 82, and a sending unit 83.

The configuring unit 81 is adapted to specify the additional notification content in the configuration item of the convergent database. The obtaining unit 82 is adapted to obtain the additional notification content specified in the configuration item after the subscribed service data is modified. In the embodiment, the additional notification content is the data that is not subscribed to by the FE but required for processing the service data modification. The sending unit 83 is adapted to send a notification request that carries the additional notification content to the FE.

### Embodiment 2

This embodiment provides a system for notifying data modification. The system includes a convergent database and an FE Subscription Profile Repository (SPR). The SPR subscribes to the user service data in the convergent database. The SPR interacts with the convergent database by using the SOAP.

The function of the system for notifying the service data modification in this embodiment is similar to that in the first embodiment except that in this embodiment, the FE interacts with the convergent database by using the SOAP.

The SPR subscribes to the change of the Packet Data Network (PDN) service data in the convergent database by a subscription request. It is required that the additional notification content carried in the notification request should be the total SPR service data of the user. When the subscription is triggered, the convergent database carries the total SPR service data in addition to the PDN data in the notification request. The SPR initiates a Profile Update request to the PCRF according to a policy to update the profile data of the user.

The additional notification content is indicated in a subscription request in the SOAP format. The additional notification content may be described by using the XQuery or directly by using the XPath expression. However, other ways may also be available. The following describes the additional notification content by using the XQuery as an example. Supposing the name of the extended parameter item entry is NotifyDataAssign, the NotifyDataAssign may be defined as follows:
<xs:element name="NotifyDataAssign" type="xs:string"/>

The notification request carries the additional notification content specified in the subscription request by the data item AdditionalNotifyData, where the additional notification content is the XQuery execution result. The AdditonNotifyData may be defined as follows:
<xs:element name="AdditionalNotifyData" type="xs:string"/>.

Suppose the SPR user data is as follows:

```
           <?xml version="1.0" encoding="UTF-8"?>
           <Profiles>
                <SPRProfile>
                    <UserName type="IMSI">450000000000000</
           UserName>
                ...
                    <PDN>
                         <PDNID>PDN001</PDNID>
                         <PCRFAddress>PCRF1</PCRFAddress>
                         ...
                         <Service>
                             <ServiceID>Service 1</ServiceID>
                             ...
                             <Qos>
                             ...
                             </Qos>
                         </Service>
                    </PDN>
                </SPRProfile>
                ...
           </Profiles>
```

According to the preceding user data, the type of the user is an international mobile subscriber identity (IMSI), and the value of IMSI is 450000000000000. The user subscribes to a PDN, where the PDN identity is PDN001, and the corresponding PCRF address is PCRF1. A subscribed service on the PDN is Service1. The QoS data corresponding to the service is the content of the element <Qos>.

When the SPR subscribes to the SPR data of the user, the following description is carried in the subscription request: When the SPR data is modified, the additional notification content is the total SPR data of the user and the SPR data includes the address of the PCRF, that is, the PCRF1. The additional notification content is carried by the element <NotifyDataAssign> in the subscription request. The content of the element <NotifyDataAssign> is shown as follows:

```
           <NotifyDataAssign>
           <![CDATA[
           xquery version "1.0';
           for $u in Profiles/SPRProfile[UserName/@type="IMSI" and
           UserName="450000000000000"]
           return <SPRData>{$u}</SPRData>]]>
           </NotifyDataAssign>
```

After receiving the subscription request, the convergent database stores the content of the subscription request, and returns a subscription response to the SPR. Here suppose that the subscription is identified by Sub001.

If the PGW modifies the QoS information of a user whose type is IMSI and whose number is 450000000000000, the XPath expression modifyPath is modified as follows:

```
            /Profiles/SPRProfile[UserName/@type="IMSI" and
           UserName="450000000000000"]/PDN[PDNID="PDN001"]/
           Service[ServiceID="Service1"]/Qos
```

After the convergent database modifies the Xpath expression to the element modifyPath, because this element belongs to a part of the subscribed content of the Sub001, the subscription of the Sub001 is triggered. The convergent database obtains the element content corresponding to the subscribed additional notification content. That is, the convergent database executes the XQuery in the <NotifyDataAssign>, uses the query result as the additional notification content, and initiates a notification request to the SPR. The additional notification content element in the notification request is described as follows:

```
           <AdditionalNotifyData>
           <![CDATA[
                <SPRData>
                    <SPRProfile>
                        <UserName type="IMSI">450000000000000</UserName>
                        ...
                        <PDN>
                             <PDNID>PDN001</PDNID>
                             <PCRFAddress>PCRF1</PCRFAddress>
                             ...
                             <Service>
                                 <ServiceID>Service1</ServiceID>
                                 <Qos>
                                 ...
                                 </Qos>
                             </Service>
                        </PDN>
                    </SPRProfile>
                </SPRData>
           ]]>
           </AdditionalNotifyData>
```

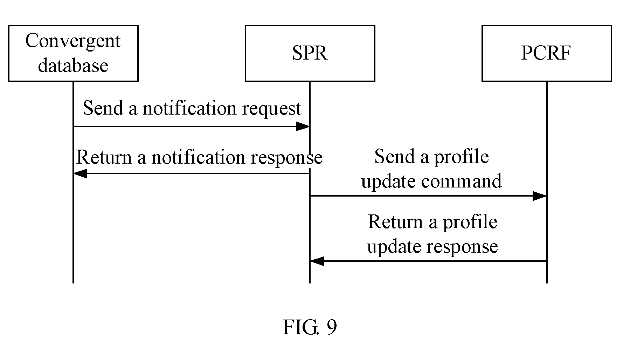

As shown in FIG. 9, after receiving the notification request, the SPR in this embodiment returns a notification response to the convergent database; the SPR determines that the SPR data of the user is changed according to the content of the notification request, and obtains the address of the PCRF and the SPR data from the additional notification content carried in the notification request. In addition, the SPR converts the SPR data into the format in the Profile Update command, and initiates a Profile Update command to the PCRF to update the SPR data content; the PCRF updates the buffered SPR data, and then returns a PPA to the SPR.

Similarly to the first embodiment, the additional notification content may also be directly configured in the convergent database. For example, the additional notification content corresponding to each piece of subscribed data is set by using a configuration file or a configuration table (collectively referred to a configuration item). When the service data in the convergent database is modified, the specified additional notification content configured in the configuration item is obtained, and then a notification request that includes the additional notification content is sent to the SPR.

When the convergent database sends a notification request to the SPR, the notification content of data modification and the total SPR data of the user are carried in the notification request, so that the SPR can directly perform subsequent service processing. In this way, the number of interactions between the SPR and the convergent database is reduced, and the SPR can perform subsequent service processing with higher efficiency.

The system for notifying data modification in this embodiment is used in the service data management on communication networks, especially in a technology where the service data modification is notified to the FE of the NE after the service data is modified.

Based on the preceding description of the embodiments, it is understandable to those skilled in the art that the present invention may be carried out through software and a necessary universal hardware platform or through hardware only. In most circumstances, the former is exemplary. Therefore, the technical solution of the present invention or contributions to the prior art may be embodied by a software product. The software product may be stored in a readable storage medium, for example, a floppy disk, a hard disk or a compact disk-read only memory (CD-ROM) in a personal computer, and incorporate several instructions to instruct a computer device, for example, a personal computer, a server, or a network device, to carry out the method provided by each embodiment of the present invention.

The descriptions above are merely exemplary embodiments of the present invention, and the protection scope of the present invention is not limited thereto. Any modification or equivalent replacement made without departing from the spirit and principle of the present invention shall fall within the scope of the present invention. Therefore, the protection scope of the present invention is subject to the appended claims.

## Claims

1. A method for notifying data modification, comprising:
after subscribed service data is modified, obtaining pre-specified additional notification content; and
sending a notification request that carries notification content of data modification and the additional notification content to a front end, FE.

2. The method of claim 1, wherein the additional notification content is the data that is not subscribed to by the FE but required for processing service data modification.

3. The method of claim 1, wherein the notification content of data modification is the modified service data of the subscribed service data or all of the subscribed service data.

4. The method of claim 1, wherein the method of pre-specifying the additional notification content comprises:
configuring the additional notification content in a convergent database.

5. The method of claim 1, further comprising:
receiving a subscription request that carries specified additional notification content from an FE.

6. The method of claim 5, wherein a new data item is added to the subscription request to specify additional notification content; or a control parameter is added to the subscription request to specify additional notification content.

7. A convergent database, comprising:
an obtaining unit, adapted to obtain pre-specified additional notification content after subscribed service data is modified; and
a sending unit, adapted to send a notification request that carries notification content of data modification and additional notification content to a front end, FE.

8. The convergent database of claim 7, further comprising:
a receiving unit, adapted to receive a subscription request that specifies additional notification content from the FE, wherein the obtaining unit is adapted to obtain the specified additional notification content in the subscription request; or
a configuring unit, adapted to specify additional notification content in a configuration item of the convergent database, wherein the obtaining unit is adapted to obtain the specified additional notification content in the configuration item.

9. A system for notifying data modification, comprising:
a convergent database, adapted to: obtain pre-specified additional notification content after subscribed service data is modified, and send a notification request that carries notification content of data modification and the additional notification content to a front end , FE; and
the FE, adapted to: receive the notification request from the convergent database, and process the notification request according to the notification content of data modification and the additional notification content.

10. The system of claim 9, wherein: the FE is further adapted to send a subscription request that specifies the additional notification content to the convergent database; the convergent database is further adapted to receive the subscription request that specifies the additional notification content from the FE; and the additional notification content obtained by the convergent database is the specified additional notification content in the subscription request.

11. The system of claim 9, wherein the convergent database is further adapted to configure additional notification content in the convergent database; and the additional notification content obtained by the convergent database is the configured additional notification content.
